# DEMANDE DE BREVET EUROPEEN

(11) **EP 4 804 459 A1**
(43) Date de publication de la demande: **09.09.2026**
(21) Numéro de dépôt: 26162450.6
(22) Date de dépôt: 04.03.2026
(51) Int. Cl.: H04L 9/32

(54) **PROCÉDÉ ET DISPOSITIF DE GÉNÉRATION DE SIGNATURE NUMÉRIQUE POST QUANTIQUE DE DONNÉES NUMÉRIQUES**

(30) Priorité: 05.03.2025 FR 2502215
(71) Demandeur: THALES, 92190 Meudon (FR)
(72) Inventeur: DUPIN, Aurélien, 92622 GENNEVILLIERS CEDEX (FR)
(74) Mandataire: Lavoix

(57) **Abrégé**

La présente invention concerne un procédé de génération de signature numérique de données numériques formant un message numérique, dans un cryptosystème sans état à base de hachage, comportant :
-une première phase (20) de pré-calcul (24) d'une première partie de signature numérique, indépendamment du message numérique, et une mémorisation (26) de l'au moins une première partie de signature numérique dans une mémoire dudit dispositif,
-une deuxième phase (30) de calcul de signature numérique du message numérique comportant :
-un calcul (32-36) d'une deuxième partie de signature numérique en fonction d'une valeur d'entrée dépendante dudit message numérique, et
-une génération (38) de la signature numérique du message numérique par concaténation de la première partie de signature numérique, calculée dans la première phase de pré-calcul, et de la deuxième partie de signature numérique.

## Description

La présente invention concerne un procédé de signature numérique de données numériques formant un message, et un dispositif de signature de données numériques formant un message associé.

L'invention se situe dans le domaine de la sécurisation des données numériques au sein des composants logiciels ou matériels, et plus particulièrement dans le domaine de la signature numérique des données numériques.

La signature numérique est critique pour l'authentification des données numériques ou messages numériques, il est donc important de mettre au point des mécanismes de génération de signature à forte sécurité cryptographique.

On connaît des mécanismes de génération d'une signature numérique pour un message numérique par cryptosystème asymétrique, utilisant une paire de clés comprenant une clé publique distribuée pour authentification de la signature et une clé privée du signataire, comme par exemple l'algorithme de signature RSA.

Il est important de disposer de mécanismes de génération de signature numérique robustes à d'éventuelles attaques de tiers malveillants, en particulier des attaques consistant à falsifier une signature, i.e. à régénérer une signature numérique sans connaissance de la clé privée.

Suite aux développements récents dans le domaine des ordinateurs quantiques, un nouveau cryptosystème de génération de signature numérique, publié sous le nom de SLH-DSA pour « Stateless Hash-Based Digital Signature Algorithm » a été standardisé par le NIST (« National Institue of Standards and Technology « ), document FIPS 205 publié par le NIST le 13 août 2024. Le standard SLH-DSA définit un mécanisme de signature sans état (ou sans mémorisation d'état) à base de hachage numérique, dans lequel la signature numérique d'un message numérique donné est calculée pour chaque message numérique. Ce standard se base sur la combinaison de plusieurs mécanismes (ou algorithmes) de signature numérique, respectivement : WOTS+ (pour « Winterlitz One-Time Signature Plus »), XMSS (pour « extended Merkle Signature Scheme ») et FORS (« Forest of Random Subsets »), comme décrit dans le document FIPS 205, publié le 13 août 2024.

L'avantage du standard SLH-DSA est qu'il est post-quantique, c'est-à-dire qu'il assure une robustesse vis-à-vis d'attaques effectuées par des ordinateurs quantiques. Un des inconvénients de ce standard est qu'il implique des calculs de signature lourds, pouvant nécessiter jusqu'à plusieurs minutes en fonction des choix des paramètres des algorithmes et de la machine d'implémentation, ce qui n'est pas compatible avec de nombreuses applications pratiques.

Le but de l'invention est alors de proposer une génération de signature numérique plus efficace d'un point de vue calculatoire, tout en restant compatible avec le standard SLH-DSA et en préservant l'avantage de sécurité cryptographique post-quantique de ce standard.

A cet effet, l'invention a pour objet un procédé de génération de signature numérique de données numériques formant un message numérique, dans un cryptosystème sans état à base de hachage, mis en œuvre par un processeur de calcul d'un dispositif électronique programmable et comportant :
- une première phase de pré-calcul d'une première partie de signature numérique, indépendamment du message numérique, et une mémorisation de l'au moins une première partie de signature numérique dans une mémoire dudit dispositif,
- une deuxième phase de calcul de signature numérique du message numérique comportant :
   - un calcul d'une deuxième partie de signature numérique en fonction d'une valeur d'entrée dépendante dudit message numérique, et
   - une génération de la signature numérique du message numérique par concaténation de la première partie de signature numérique, calculée dans la première phase de pré-calcul, et de ladite deuxième partie de signature numérique.

Avantageusement, la séparation en deux phases, respectivement une première phase de pré-calcul préalable, pour générer une première partie de signature numérique indépendante du message numérique à signer, et une deuxième phase de calcul de la signature numérique qui est fonction du message numérique, permet de réaliser la phase de pré-calcul « hors ligne » et de réaliser seulement la deuxième phase de calcul lors d'une mise en œuvre opérationnelle. Ainsi, le procédé proposé est plus rapide et consomme moins de ressources calculatoires lors de la mise en œuvre opérationnelle.

Suivant d'autres aspects avantageux de l'invention, le procédé de génération de signature numérique comprend une ou plusieurs des caractéristiques suivantes, prises isolément ou suivant toutes les combinaisons techniquement possibles.

Le cryptosystème comporte une structure arborescente de calcul d'une clé publique racine, la structure arborescente comportant au moins un arbre binaire, le ou chaque arbre binaire comportant un nœud racine, des nœuds intermédiaires, et des nœuds terminaux, le nœud racine et chaque nœud intermédiaire d'un niveau D étant lié à deux nœuds enfants d'un niveau D-1, une valeur associée à un nœud intermédiaire de niveau D étant calculée par une fonction de hachage cryptographique, appliquée aux valeurs associées aux deux nœuds enfants dudit nœud, la clé publique de signature étant la valeur associée au nœud racine de la structure arborescente du cryptosystème, la clé publique racine étant associée au nœud racine de la structure arborescente, et étant calculée à partir d'une valeur associée à un des nœuds terminaux de la structure arborescente, la première phase de pré-calcul comportant une sélection, en fonction d'un aléa cryptographique, d'un indice d'un nœud terminal d'un arbre binaire de ladite structure arborescente, dit nœud terminal sélectionné, pour le calcul de la clé publique racine.

La première phase de pré-calcul comporte en outre un calcul d'une signature associée au nœud terminal sélectionné, en fonction d'une clé secrète, et un calcul de valeurs dites valeurs complémentaires intermédiaires associées à des nœuds intermédiaires formant un chemin d'authentification reliant ledit nœud terminal et le nœud racine de la structure arborescente, lesdits valeurs complémentaires intermédiaires permettant de calculer la valeur associée au nœud racine à partir de la valeur associée audit nœud terminal.

Le procédé comporte en outre un calcul d'une signature associée à chaque nœud racine d'un arbre binaire dudit chemin authentification.

La première partie de signature comprend l'aléa cryptographique, les valeurs complémentaires intermédiaires, la signature associée au nœud terminal sélectionné et les signatures associées à chaque nœud racine d'un arbre binaire dudit chemin authentification.

La deuxième phase de calcul comporte un calcul d'un condensé cryptographique du message numérique en fonction d'un aléa cryptographique, le calcul de la deuxième partie de signature étant appliqué à partir du condensé cryptographique.

L'aléa cryptographique utilisé dans le calcul d'un condensé cryptographique du message numérique est l'aléa cryptographique utilisé dans la première phase de pré-calcul.

La deuxième phase de calcul comporte en outre une extraction d'une portion du condensé du message, le calcul de la deuxième partie de signature étant appliqué sur ladite portion du condensé du message.

Le calcul de la deuxième partie de signature met en œuvre un schéma de forêt de sous-ensembles aléatoires, FORS

L'invention concerne également un dispositif de génération de signature numérique de données numériques formant un message numérique, dans un cryptosystème sans état à base de hachage, comportant un processeur de calcul. Ce dispositif est configuré pour mettre en œuvre :
- un module d'exécution d'une première phase de pré-calcul d'une première partie de signature numérique, indépendamment du message numérique, et de mémorisation de l'au moins une première partie de signature numérique dans une mémoire du composant de sécurité,
- un module d'exécution d'une deuxième phase de calcul de signature numérique du message numérique, configuré pour mettre en œuvre:
   - un calcul d'une deuxième partie de signature numérique en fonction d'une valeur d'entrée dépendante dudit message numérique, et
   - une génération de la signature numérique du message numérique par concaténation de la première partie de signature numérique, calculée dans la phase de pré-calcul, et de ladite deuxième partie de signature numérique.

L'invention concerne également un programme d'ordinateur comportant des instructions logicielles qui, lorsqu'elles sont exécutées par un ordinateur, mettent en œuvre un procédé de génération de signature numérique tel que défini ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'une structure arborescente de signature utilisée dans SLH-DSA ;
[Fig. 2] la figure 2 est un bloc-diagramme d'un dispositif de génération de signature numérique selon un mode de réalisation ;
[Fig. 3] la figure 3 est un logigramme des principales étapes d'un procédé de génération de signature numérique selon un mode de réalisation.

L'invention s'applique dans le cadre d'un cryptosystème sans mémorisation d'états, à base de hachage cryptographique, comme par exemple le cryptosystème défini par le standard SLH-DSA, également appelé cryptosystème SLH-DSA ci-après.

L'utilisation de fonctions de hachage cryptographique est bien connue et utilisée dans le domaine de la cryptographie. Une fonction de hachage cryptographique est une fonction de hachage qui génère, à partir d'une donnée de taille arbitraire, une donnée ou image de taille fixe, et qui est non inversible. Les fonctions Secure Hash Algorithm (SHA) du NIST sont des exemples de fonctions de hashage cryptographique.

Le cryptosystème SLH-DSA est également connu sous le nom de SPHINCS+, et peut être vu comme la fusion des trois mécanismes ou algorithmes suivants : WOTS+ : un schéma de signature minimaliste permettant de générer une seule signature par clé ; XMSS (pour « eXtended Merkle Signature Scheme ») qui est un schéma regroupant un grand nombre de signatures sous la forme d'un arbre binaire et un schéma appelé forêt de sous-ensembles aléatoires ou FORS (« Forest of Random Subsets ») qui permet de générer une dizaine de signatures par clé.

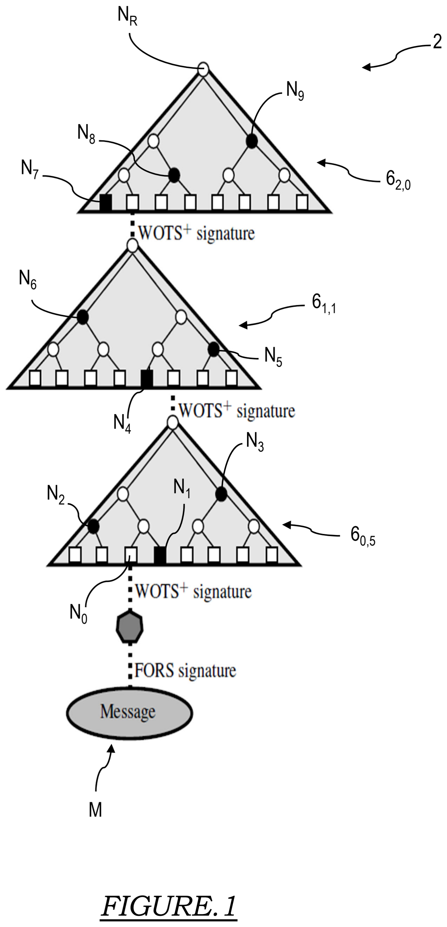

La figure 1 illustre schématiquement une structure de calcul d'une clé publique de signature selon le cryptosystème SPHINCS+.

Le cryptosystème comprend une structure arborescente 2 de calcul d'une clé publique de signature, la structure arborescente 2 étant une forêt d'arbres binaires de signature référencés sous la forme 6_{x,y} dans la figure 1, l'indice x étant représentatif d'un niveau de l'arbre dans la structure arborescente 2, et l'indice y étant distinctif entre arbres frères de même niveau.

D'une manière générale chaque arbre binaire de la structure arborescente 2 a un indice associé dans la structure, qui permet d'identifier précisément l'arbre binaire dans la structure arborescente. D'autres manière d'indexer les arbres dans la structure arborescente que celle décrite ci-dessus sont envisageables.

La structure arborescente 2 illustrée à titre d'exemple dans la figure 1 comporte trois niveaux de profondeur d'indices x=2, puis x=1 et x=0.

Chaque arbre binaire 6_{x,y} comprend 4 niveaux de profondeur internes à l'arbre.

De manière connue, un arbre binaire est composé de nœuds, et comporte un nœud racine, des nœuds intermédiaires et des nœuds terminaux (ou feuilles). Le nœud racine a deux nœuds enfants de niveau inférieur, puis chaque nœud intermédiaire Nod_j,D de niveau D a deux nœuds enfants de niveau inférieur D-1, respectivement Nod_k,D-1 et Nod_k+1,D-1. Les nœuds terminaux n'ont pas de nœuds enfants. Les nœuds d'un même niveau sont dits nœuds frères (en anglais « siblings »). Chaque nœud d'un arbre binaire a un indice de nœud associé, qui permet de le situer dans l'arbre binaire. Les nœuds terminaux ou feuilles se situent au niveau d'indice x=0.

Chaque nœud a une valeur associée, et la valeur associée d'un nœud Nod_j,D est fonction des valeurs associées à ses nœuds enfants Nod_k,D-1 et Nod_k+1,D-1.

Dans le cryptosystème SLH-DSA, des signatures WOTS+ sont appliquées pour chaque nœud racine d'un arbre 6_{x,y} de niveau x pour obtenir la valeur du nœud feuille correspondant d'un arbre 6_{x+1,z} de niveau supérieur x+1.

Pour un message numérique M, une signature FORS est appliquée, et une valeur de signature SIG-FORS est obtenue, puis une signature WOTS+ est calculée pour obtenir un indice de nœud désignant un nœud terminal dans la structure arborescente 2.

En d'autres termes, le standard SLH-DSA préconise le calcul de l'indice Ind d'un nœud terminal, Nod-Ind, appelé ci-après nœud sélectionné, en fonction du message numérique M, d'une clé secrète et optionnellement d'une valeur pseudo-aléatoire R.

La signature du message numérique est formée par une concaténation des éléments suivants :
- une signature FORS du message M,
- des valeurs dites valeurs complémentaires intermédiaires, associées aux nœuds frères des nœuds terminaux et intermédiaires des arbres de signature qui forment un parcours d'authentification (ou chemin d'authentification) entre le nœud sélectionné et le nœud racine de la structure arborescente 2, et
- la valeur associée au nœud racine de la structure arborescente 2, également appelée clé publique racine.

En se référant à l'exemple schématique de la figure 1, le nœud sélectionné est le nœud N₀, et les nœuds frères considérés, dont les valeurs complémentaires intermédiaires sont insérées dans la signature, sont les nœuds N₁, N₂, N₃, N₄, N₅, N₆, N₇, N₈ et N₉. Les valeurs complémentaires intermédiaires associées à ces nœuds, en combinaison avec la valeur associée au nœud N₀, permettent de calculer, en remontant le chemin d'authentification, la valeur de clé publique racine, associée au nœud racine N_{R} de la structure arborescente.

Le procédé de signature numérique proposé s'inscrit dans un cryptosystème de structure arborescente tel que décrit ci-dessus, mais la génération de signature numérique est modifiée comme décrit ci-après.

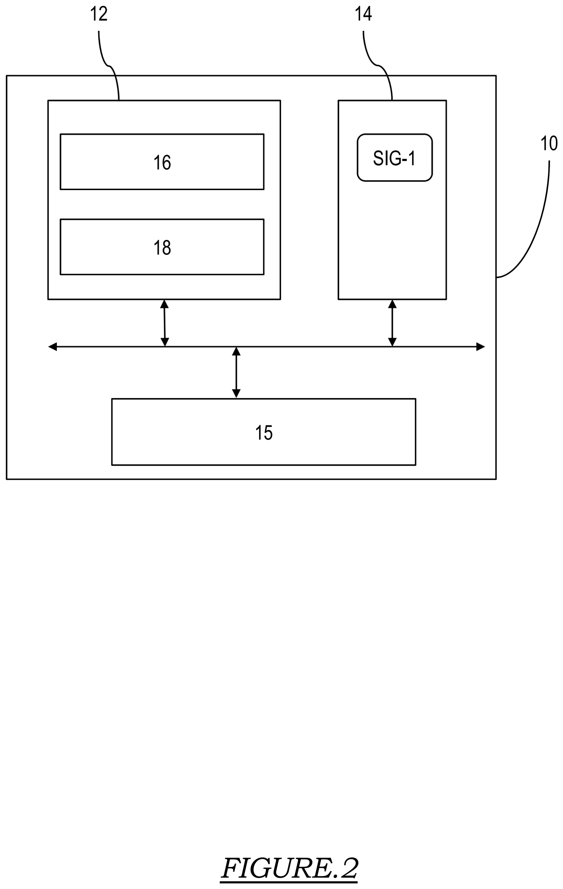

La figure 2 est un synoptique d'un dispositif 10 de génération de signature numérique selon un mode de réalisation.

Le dispositif 10 de génération de signature est un dispositif électronique programmable.

Dans un mode de réalisation le dispositif 10 est un composant de sécurité d'un système informatique, utilisé par exemple pour générer une signature numérique de données numériques sensibles, comme par exemple des clés permettant d'établir un canal de communication chiffré entre deux dispositifs distants.

Le dispositif 10 comporte un processeur de calcul 12, une mémoire électronique 14, et une interface d'entrées/sortie 15, ces éléments étant configurés pour communiquer entre eux via un bus de communication interne.

Le processeur de calcul 12 est configuré pour exécuter un module 16 de première phase de pré-calcul d'une première partie de signature numérique, indépendamment d'un message numérique. La première partie de signature numérique calculée SIG-1 est mémorisée, par exemple dans la mémoire électronique 14.

Le processeur de calcul 12 est en outre configuré pour exécuter un module 18 de mise en œuvre d'une deuxième phase de calcul de la signature d'un message numérique. Le module 18 effectue un calcul d'une deuxième partie de signature numérique SIG-2(M) en fonction d'une valeur d'entrée dépendante d'un message numérique, fourni via l'interface 15, et une génération de la signature numérique du message numérique par concaténation de la première partie de signature numérique SIG-1, calculée dans la phase de pré-calcul, et de la deuxième partie de signature numérique SIG-2(M).

Dans un mode de réalisation, les modules 18, 20 sont réalisés sous forme d'instructions logicielles formant un programme d'ordinateur, qui, lorsqu'il est exécuté par un dispositif électronique programmable, met en œuvre un procédé génération d'une signature numérique tel que décrit.

En variante non représentée, les modules 18, 20 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Le procédé de génération de signature proposé modifie avantageusement le cryptosystème SLH-DSA décrit ci-dessus, les calculs à effectuer « en ligne », c'est-à-dire au moment de la génération de la signature effective d'un message, étant allégés, car seule la deuxième partie de signature SIG-2(M) dépend du message.

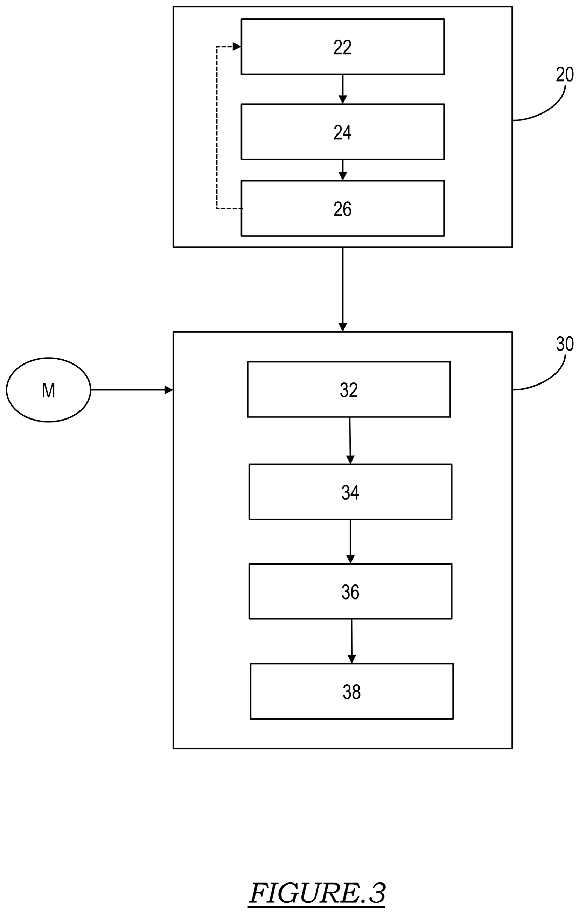

La figure 3 est un logigramme des principales phases du procédé de génération de signature selon un mode de réalisation.

Le procédé est mis en œuvre par un processeur de calcul d'un dispositif électronique programmable, de préférence un processeur de calcul d'un composant de sécurité.

Le procédé comporte une première phase 20 de pré-calcul d'au moins une première partie de signature numérique, indépendamment du message numérique à signer, et de mémorisation de la ou des premières parties de signature numérique dans une mémoire du dispositif électronique programmable.

Le procédé s'applique pour une structure arborescente de signature donnée, dont les paramètres de structure sont connus, par exemple le nombre de niveaux de la structure, le nombre de niveaux de profondeur interne des arbres binaires.

Le pré-calcul 20 comporte une sélection 22 d'un indice de nœud terminal en fonction d'un aléa cryptographique R. Par exemple l'aléa cryptographique R est une source d'entropie ou un générateur de nombres pseudo-aléatoires.

La sélection 22 est suivie d'un calcul 24 d'une signature WOTS+ associée au nœud sélectionné et des valeurs complémentaires intermédiaires associées aux nœuds frères des nœuds terminaux et intermédiaires des arbres de signature XMSS qui forment un parcours d'authentification (ou chemin d'authentification) entre le nœud sélectionné et le nœud racine de la structure arborescente de signature.

L'étape de calcul 24 comporte également, pour chaque arbre de signature XMSS du chemin d'authentification, un calcul d'une signature WOTS+ associée au nœud racine de l'arbre.

Le pré-calcul 20 comporte ensuite une mémorisation 26 de la première partie de signature SIG-1 associée au nœud sélectionné.

La première partie de signature SIG-1 comporte l'aléa cryptographique R, les signatures WOTS+ et les valeurs complémentaires intermédiaires des arbres XMSS.

Optionnellement, plusieurs premières parties de signature SIG-1 sont calculées et mémorisées, en utilisant un aléa cryptographique distinct pour chaque calcul.

Le procédé comporte ensuite une deuxième phase 30 de calcul d'une signature numérique d'un message numérique, la signature du message numérique étant formée par concaténation d'une première partie de signature numérique SIG-1, calculée dans la phase de pré-calcul, et d'une deuxième partie de signature numérique SIG-2(M) dépendante du message numérique.

Le message numérique M est fourni en entrée de la deuxième phase 30.

La deuxième phase 30 comporte optionnellement une étape 32 de calcul d'un condensé cryptographique du message numérique M, par exemple en appliquant une fonction de hachage cryptographique, en fonction d'un aléa cryptographique R', ainsi que d'une clé publique PK. De préférence, l'aléa cryptographique R' est identique à l'aléa cryptographique R utilisé dans la première phase de pré-calcul.

La fonction de hachage utilisée doit être résistante aux attaques de pré-images. Une fonction de hachage fournissant X bits de sécurité face aux calculs de pré-image peut être utilisée dans SLH-DSA : l'instance de SLH-DSA obtenue fournira également X bits de sécurité face à la falsification de signature. Les instances standardisées de X sont 128, 192 et 256.

Dans un mode de réalisation, la deuxième phase comprend en outre une étape d'extraction 34 d'une portion du condensé cryptographique.

Par exemple l'extraction 34 est une extraction des Q premiers octets du condensé cryptographique, Q dépendant de du nombre K d'arbres en parallèle et de la profondeur A des arbres, selon l'algorithme de signature FORS. Dans un mode de réalisation, Q est l'entier obtenu par arrondi supérieur de K*A/8.

La deuxième phase 30 comprend en outre un calcul 36 de la deuxième partie de signature SIG-2(M), en fonction d'une valeur d'entrée dépendant du message numérique M. La valeur d'entrée est soit le message numérique M, ou le condensé cryptographique du message numérique M, ou la portion du condensé cryptographique extraite le cas échéant.

La deuxième partie de signature SIG-2(M) est calculée par application d'un algorithme de signature.

Par exemple, l'algorithme de signature appliqué à l'étape 36 est l'algorithme de signature FORS, appliqué sur la valeur l'entrée dépendante du message numérique M, en utilisant une clé secrète.

La deuxième phase comporte en outre une étape 38 de génération de la signature numérique SIG(M) du message numérique M par concaténation de la première partie de signature numérique, SIG-1, calculée lors de la première phase 20 et de la deuxième partie de signature numérique SIG-2(M).$SIG \left(M\right) = SIG -1 \left|\right| SIG -2 \left(M\right)$

Avantageusement, la première phase de pré-calcul peut être mise en œuvre en avance, avant la réception d'un message numérique à signer, ce qui permet de générer une signature de message numérique plus rapidement. En effet, de lourds calculs sont effectués dans la première phase de pré-calcul, ce qui permet d'alléger significativement la charge calculatoire restante dans la deuxième phase de calcul de la deuxième partie de signature numérique dépendant du message.

## Revendications

1. Procédé de génération de signature numérique de données numériques formant un message numérique, dans un cryptosystème sans état à base de hachage, mis en œuvre par un processeur de calcul d'un dispositif électronique programmable et étant **caractérisé en ce qu'**il comporte :
- une première phase (20) de pré-calcul (24) d'une première partie de signature numérique, indépendamment du message numérique, et une mémorisation (26) de l'au moins une première partie de signature numérique dans une mémoire dudit dispositif,
- une deuxième phase (30) de calcul de signature numérique du message numérique comportant :
- un calcul (32-36) d'une deuxième partie de signature numérique en fonction d'une valeur d'entrée dépendante dudit message numérique, et
- une génération (38) de la signature numérique du message numérique par concaténation de la première partie de signature numérique, calculée dans la première phase de pré-calcul, et de ladite deuxième partie de signature numérique.

2. Procédé selon la revendication 1, le cryptosystème comportant une structure arborescente de calcul d'une clé publique racine, la structure arborescente comportant au moins un arbre binaire, le ou chaque arbre binaire comportant un nœud racine, des nœuds intermédiaires, et des nœuds terminaux, le nœud racine et chaque nœud intermédiaire d'un niveau D étant lié à deux nœuds enfants d'un niveau D-1, une valeur associée à un nœud intermédiaire de niveau D étant calculée par une fonction de hachage cryptographique, appliquée aux valeurs associées aux deux nœuds enfants dudit nœud, la clé publique de signature étant la valeur associée au nœud racine de la structure arborescente du cryptosystème, la clé publique racine étant associée au nœud racine de la structure arborescente, et étant calculée à partir d'une valeur associée à un des nœuds terminaux de la structure arborescente, dans lequel la première phase de pré-calcul (30) comporte une sélection, en fonction d'un aléa cryptographique, d'un indice d'un nœud terminal d'un arbre binaire de ladite structure arborescente, dit nœud terminal sélectionné, pour le calcul de la clé publique racine.

3. Procédé selon la revendication 2, dans lequel la première phase de pré-calcul (30) comporte en outre un calcul d'une signature associée au nœud terminal sélectionné, en fonction d'une clé secrète, et un calcul de valeurs dites valeurs complémentaires intermédiaires associées à des nœuds intermédiaires formant un chemin d'authentification reliant ledit nœud terminal et le nœud racine de la structure arborescente, lesdits valeurs complémentaires intermédiaires permettant de calculer la valeur associée au nœud racine à partir de la valeur associée audit nœud terminal.

4. Procédé selon la revendication 3, comportant en outre un calcul d'une signature associée à chaque nœud racine d'un arbre binaire dudit chemin d'authentification.

5. Procédé selon la revendication 4, dans lequel ladite première partie de signature comprend l'aléa cryptographique, les valeurs complémentaires intermédiaires, la signature associée au nœud terminal sélectionné et les signatures associées à chaque nœud racine d'un arbre binaire dudit chemin d'authentification.

6. Procédé selon l'une quelconque des revendications 1 à 5, dans lequel la deuxième phase de calcul comporte un calcul d'un condensé cryptographique du message numérique en fonction d'un aléa cryptographique, le calcul de la deuxième partie de signature étant appliqué à partir du condensé cryptographique.

7. Procédé selon la revendication 6 dans lequel l'aléa cryptographique utilisé dans le calcul d'un condensé cryptographique du message numérique est l'aléa cryptographique utilisé dans la première phase de pré-calcul.

8. Procédé selon la revendication 6 ou 7, dans lequel la deuxième phase de calcul comporte en outre une extraction d'une portion du condensé du message, le calcul de la deuxième partie de signature étant appliqué sur ladite portion du condensé du message.

9. Procédé selon l'une quelconque des revendications 6 à 8, dans lequel le calcul de la deuxième partie de signature met en œuvre un schéma de forêt de sous-ensembles aléatoires, FORS.

10. Programme d'ordinateur comportant des instructions logicielles, qui, lorsqu'elles sont exécutées par un dispositif électronique programmable, mettent en œuvre un procédé de génération de signature numérique conforme aux revendications 1 à 9.

11. Dispositif de génération de signature numérique de données numériques formant un message numérique, dans un cryptosystème sans état à base de hachage, comportant un processeur de calcul et étant **caractérisé en ce qu'**il est configuré pour mettre en oeuvre :
- un module (16) d'exécution d'une première phase de pré-calcul d'une première partie de signature numérique, indépendamment du message numérique, et de mémorisation de l'au moins une première partie de signature numérique dans une mémoire du composant de sécurité,
- un module (18) d'exécution d'une deuxième phase de calcul de signature numérique du message numérique, configuré pour mettre en œuvre:
- un calcul d'une deuxième partie de signature numérique en fonction d'une valeur d'entrée dépendante dudit message numérique, et
- une génération de la signature numérique du message numérique par concaténation de la première partie de signature numérique, calculée dans la phase de pré-calcul, et de ladite deuxième partie de signature numérique.
